# EUROPÄISCHE PATENTSCHRIFT

(11) **EP 2 685 114 B1**
(45) Veröffentlichungstag und Bekanntmachung des Hinweises auf die Patenterteilung: **30.07.2014**
(21) Anmeldenummer: 13170297.9
(22) Anmeldetag: 03.06.2013
(51) Int. Cl.: F16C 17/24

(54) **Gleitlager sowie Verfahren zur Bestimmung des Verschleißes eines Gleitlagers**
Sliding bearings and method for determining the wear of a sliding bearing
Palier lisse et procédé de détermination de l'usure d'un palier lisse

(30) Priorität: 12.07.2012 DE 102012106295
(43) Veröffentlichungstag der Anmeldung: 15.01.2014
(73) Patentinhaber: Institut Für Verbundwerkstoffe GmbH, 67633 Kaiserslautern (DE)
(72) Erfinder: Sebastian, Ron, 67098 Bad Dürkheim (DE); Burkhart, Dr. Thomas, 66994 Dahn (DE)
(74) Vertreter: Berkenbrink, Kai-Oliver

(56) Entgegenhaltungen:
- WO-A1-2011/131826
- DE-A1-102005 059 165
- GB-A- 2 192 949
- US-A- 4 320 431
- US-A- 5 701 119
- US-A1- 2009 317 028

## Beschreibung

Die Erfindung betrifft ein Gleitlager sowie ein Verfahren zur Bestimmung des Verschleißes eines Gleitlagers.

Im Gegensatz zu Wälzlagern, bei denen die relativ zueinander bewegbaren Teile über Wälzkörper aufeinander abrollen, haben die zueinander bewegbaren Teile bei Gleitlagern direkten Kontakt miteinander und sind allenfalls durch den Schmierfilm eines Schmiermittels voneinander getrennt. Die häufigste Ausführungsform eines Gleitlagers ist das Radiallager, bei dem ein Teil, insbesondere eine Welle, drehbar in der Gleitlagerbuchse des Gleitlagers gelagert ist.

Eine bestimmte Ausführungsform des Gleitlagers ist das Kunststoffgleitlager. Kunststoffgleitlager weisen Gleitlagerbuchsen aus speziellen Kunststoffen auf, in denen ein Teil, insbesondere eine Welle, reibungsarm drehbar gelagert ist. Gleitlagerbuchsen in Kunststoffgleitlagern können als Verbundwerkstoffe ausgebildet sein, wobei beispielsweise Verstärkungsstoffe oder Schmierstoffe in eine Kunststoffmatrix eingelagert sind.

Gleitlagerbuchse sind oftmals auch mehrschichtig, insbesondere als Verbundwerkstoff ausgebildet. Dabei ist regelmäßig eine innere Gleitschicht vorgesehen, die eine Gleitfläche für die in der Gleitlagerbuchse gelagerte Welle bietet. Die Gleitschicht ist an ihrem Außenumfang von weiteren Schichten, die verschiedene Funktionen erfüllen können, umfasst. So kann beispielsweise eine außenseitig angeordnete Träger- oder Stützschicht vorgesehen sein, in der die Gleitschicht, gegebenenfalls über eine zwischengeschaltete Schicht, angeordnet ist. Ferner ist bekannt, die Gleitschicht innenseitig mit einer Einlaufschicht auszubilden, die insbesondere zum Einlaufen bei der Inbetriebnahme des Lagers dient und durch die Welle beim Einlaufen schnell verschlissen wird, so dass die Welle nach dem Einlaufen in Kontakt mit der Gleitschicht tritt.

Bei Drehung der Welle in der Gleitlagerbuchse findet ein kontinuierlicher Reibprozess zwischen Welle und Gleitlagerbuchse statt, der eine abrasive Wirkung sowohl auf die Welle, als auch auf die Gleitlagerbuchse hat. Da die Welle in der Regel aus einem härteren Werkstoff besteht als die Gleitlagerbuchse, insbesondere bei Kunststoffgleitlagern, unterliegt die Gleitlagerbuchse regelmäßig einem deutlich höheren Verschleiß als die Welle. Bei Erreichen eines bestimmten Verschleißfortschrittes ist die Gleitlagerbuchse zu ersetzen.

Eine kontinuierliche Bestimmung des Zustandes des Lagers, insbesondere des Verschleißfortschrittes der Gleitlagerbuchse, ist damit eine wichtige, jedoch in der Praxis häufig nur schwer zu lösende Aufgabe.

So ist eine Überwachung des Verschleißes von Gleitlagern häufig nicht einfach zu realisieren, da eine kostenintensive Sensorik oder ein großer mechanischer Aufwand notwendig sind, um eine Überwachung, insbesondere eine kontinuierliche Überwachung des Zustandes eines Gleitlagers zu ermöglichen.

Zur Überwachung des Verschleißes von Gleitlagern sind zahlreiche Technologien bekannt.

Eine der gängigsten Methoden zur Überwachung des Verschleißfortschrittes eines Gleitlagers ist die Körperschallanalyse. Dieses Verfahren wird oftmals auch bei Wälzlagern oder Maschinen eingesetzt, um durch Änderungen des Schwingverhaltens auf einen Verschleiß schließen zu können, siehe beispielsweise DE 33 32 941 A1. Nachteilig an der Körperschall- und Schallemissionsanalyse sind die damit in der Regel verbundenen hohen Kosten. Ferner steigt die Komplexität der Analyse durch die Superposition verschiedener Schwingungen in Lagern oder Maschinen schnell an, da die Schallemissionen einzelner Elemente schwierig voneinander zu isolieren sind.

Zur Überwachung des Verschleißes an der Welle eines Gleitlagers ist es ferner bekannt, das anliegende Drehmoment zu überwachen, siehe beispielsweise US 5,599,112 und JP 03041335 A. Nachteilig an dieser Messmethode ist, dass stets der gesamte Leistungsstrang gemessen wird. Um ein Lager einzeln zu überwachen, wären bereits zwei Messstände mit Drehmomentsensorik notwendig, was wiederum erhöhte Anforderungen an die Sensorik und Auswertung stellen würde. Darüber hinaus ist die Einrichtung einer solchen Messstelle konstruktiv häufig nicht möglich.

Eine weitere Möglichkeit zur Überwachung des Verschleißes eines Gleitlagers bietet die Messung des Lagespaltes beziehungsweise die Abweichung der Welle von der ursprünglichen Position an, siehe beispielsweise JP 03229125 A. Auch bei dieser Messmethode ist die Einrichtung einer geeigneten Messstelle konstruktiv häufig nicht möglich.

Ferner ist zur Messung des Verschleißes eines Gleitlagers die Überwachung einer Temperatur am Gleitlager bekannt. Nachteilig an diesem Verfahren ist, dass Temperaturerhöhungen häufig nur mit einer erheblichen Zeitverzögerung und darüber hinaus häufig nur mittelbar messbar sind.

DE 10 2005 059 165 A1 zeigt ein Gleitlager mit den Merkmalen der Präambel des Anspruchs 1.

Der vorliegenden Erfindung liegt die Aufgabe zu Grunde, ein Gleitlager zur Verfügung zu stellen, bei dem der Verschleiß des Lagers einfach, zuverlässig und schnell bestimmbar ist.

Eine weitere Aufgabe der Erfindung besteht darin, ein Verfahren zur Bestimmung des Verschleißes eines Gleitlagers zur Verfügung zu stellen, durch welches der Verschleiß eines Gleitlagers einfach, zuverlässig und schnell bestimmbar ist.

Zur Lösung der erstgenannten Aufgabe wird erfindungsgemäß zur Verfügung gestellt ein Gleitlager, mit den Merkmalen des Anspruchs 1.

Die Erfindung beruht auf der Grundidee, die Gleitlagerbuchse neben der Gleitschicht, in der eine elektrisch leitfähige Welle bei Normalbetrieb des Gleitlagers geführt ist, um eine weitere Schicht zu ergänzen, die eine andere elektrische Leitfähigkeit aufweist als die Gleitschicht, wobei die Schichten derart angeordnet sind, dass die Welle bei einem durch die Welle hervorgerufenen Verschleiß der Gleitschicht in Kontakt mit der wenigstens einen weiteren Schicht tritt und wobei ferner eine Vorrichtung zur Messung des elektrischen Widerstandes zwischen der weiteren Schicht und einer durch die Gleitlagerbuchse geführten elektrisch leitfähigen Welle vorgesehen ist. Im ordnungsgemäßen Zustand des Gleitlagers, also bei keinem oder einem nur geringfügigen Verschleiß der Gleitschicht, tritt die Welle in der Gleitlagerbuchse damit allein in Kontakt mit der Gleitschicht, nicht jedoch mit der weiteren Schicht. Erst nach einem Verschleiß der Gleitschicht tritt die Welle (auch) in Kontakt mit der weitere Schicht. Ein derart ausgebildetes Gleitlager ermöglicht es, dass der Zustand des Lagers, also insbesondere ein Verschleiß der Gleitschicht, einfach, schnell und zuverlässig bestimmt wird, indem der elektrische Widerstand zwischen der elektrisch leitfähigen Welle und der weiteren Schicht gemessen wird. Denn sobald bei einem Verschleiß der Gleitschicht die Welle in Kontakt mit der weiteren Schicht tritt, ändert sich - aufgrund des unterschiedlichen elektrischen Widerstandes von Gleitschicht und weiterer Schicht - der durch die Vorrichtung zur Messung des elektrischen Widerstandes gemessene elektrische Widerstand, womit ein Verschleiß der Gleitschicht indiziert wird.

Ein besonderer Vorteil des erfindungsgemäßen Gleitlagers besteht darin, dass in diesem der Zustand des Lagers besonders einfach bestimmbar ist. Denn die Vorrichtung zur Messung des elektrischen Widerstandes ist ohne weiteres schnell und einfach an eine Gleitlagerbuchse eines Gleitlagers sowie an eine Welle anschließbar. Auch bestehende Gleitlager können gegebenenfalls mit geringem Aufwand zur Erstellung eines erfindungsgemäßen Gleitlagers um eine Vorrichtung zur Messung des elektrischen Widerstandes ergänzt werden, soweit das Lager die erfindungsgemäße Schichtenanordnung aufweist.

Ein weiterer Vorteil der Erfindung besteht darin, dass durch die Vorrichtung zur Messung des elektrischen Widerstandes der Zustand des Gleitlagers besonders zuverlässig bestimmbar ist, da die durch die Vorrichtung zur Messung des elektrischen Widerstandes gemessenen Messwerte unmittelbar Aufschluss über den Zustand des Lagers geben und die erhaltenden Messwerte beispielsweise nicht durch weitere Elemente des Lagers superpositioniert werden.

Ferner besteht ein Vorteil des erfindungsgemäßen Gleitlagers darin, dass der Zustand des Lagers durch die Vorrichtung zur Messung des elektrischen Widerstandes sehr schnell und ohne Zeitverzögerung bestimmbar ist, so dass der Zustand des erfindungsgemäßen Kunststoffgleitlagers kontinuierlich in Echtzeit überwachbar ist.

Schließlich wird das Lager durch die Vorrichtung zur Messung des elektrischen Widerstandes in keiner Weise qualitativ beeinträchtigt, so dass ein erfindungsgemäßes Gleitlager, das eine Vorrichtung zur Messung des elektrischen Widerstandes aufweist, die gleiche Lagerqualität wie ein Gleitlager ohne eine solche Vorrichtung aufweist.

Nach einer bevorzugten Ausführungsform ist das erfindungsgemäße Gleitlager als Kunststoffgleitlager ausgebildet. Die Gleitschicht ist damit als Kunststoff beziehungsweise Polymer oder auf Polymerbasis ausgebildet.

Die Gleitschicht kann als elektrischer Isolator, also als elektrisch nicht leitender Körper ausgebildet sein. Soweit die Gleitschicht als Isolator ausgebildet ist, weist sie bevorzugt eine elektrische Leitfähigkeit von unter 10⁻⁸ S/m (zehn hoch minus acht Siemens pro Meter) auf. Die Gleitschicht kann alternativ elektrisch gering leitfähig ausgebildet sein, beispielsweise mit einer elektrischen Leitfähigkeit von unter 10⁻⁶, 10⁻⁴, 10⁻² oder von unter 10 S/m.

Die Gleitschicht kann grundsätzlich aus einem beliebigen aus dem Stand der Technik zur Konfektionierung von Gleitschichten bekannten Kunststoff aufgebaut sein, beispielsweise aus Polytetraflourethylen (PTFE).

Es ist vorgesehen, dass die weitere Schicht mehrschichtig aufgebaut ist. Die weitere Schicht ist aus mehreren Schichten mit einer unterschiedlichen elektrischen Leitfähigkeit aufgebaut dabei. Hierdurch lassen sich durch Messung des Widerstandes mittels der Vorrichtung zur Messung des elektrischen Widerstandes auch quantitative Informationen über den Verschleißzustand des Gleitlagers beziehungsweise der Gleitschicht erhalten.

Erfindungsgemäß kann insbesondere vorgesehen sein, dass die weitere Schicht als elektrisch leitfähige Schicht ausgebildet ist, also als elektrisch leitfähiger beziehungsweise elektrisch leitender Körper. Beispielsweise kann die weitere Schicht aus Metall ausgebildet sein. Besonders bevorzugt ist die weitere Schicht als elektrisch leitfähiger Kunststoff beziehungsweise als elektrisch leitfähiges Polymer ausgebildet. Da Kunststoffe in der Regel elektrisch nicht leitfähig sind beziehungsweise einen elektrischen Isolator darstellen, kann erfindungsgemäß vorgesehen sein, die weitere Schicht derart zu konfektionieren, dass diese elektrisch leitfähig ist.

Zum Erreichen einer elektrischen Leitfähigkeit der weiteren Schicht kann bevorzugt vorgesehen sein, dass die weitere Schicht elektrisch leitfähige Füllstoffe derart aufweist, so dass die weitere Schicht hierdurch insgesamt elektrisch leitfähig ist. Nach einer bevorzugten Ausführungsform umfasst die weitere Schicht hierzu ein Matrixpolymer, in das die leitfähigen Füllstoffe eingebettet sind, so dass die weitere Schicht einen elektrisch leitfähigen Verbundwerkstoff aus einer Kunststoffmatrix mit darin eingebetteten, elektrisch leitfähigen Füllstoffen bildet.

Die elektrisch leitfähigen Füllstoffe können grundsätzlich in Form eines oder mehrerer elektrisch leitfähiger Werkstoffe vorliegen. Beispielsweise kann die weitere Schicht wenigstens einen leitfähigen Füllstoff aus einem der folgenden elektrisch leitfähigen Stoffe aufweisen: Kohlenstoff, Stahl oder Kupfer.

Bei den elektrisch leitfähigen Füllstoffen kann es sich insbesondere um mikro- oder nanoskalige elektrisch leitfähige Füllstoffe handeln. Beispielsweise können die elektrisch leitfähigen Füllstoffe in Form von Fasern, Körnern oder einer sonstigen Partikelform vorliegen. Soweit die elektrisch leitfähigen Füllstoffe in Form von Kohlenstoff vorliegen, kann es sich beispielsweise um Füllstoffe in Form von Kohlenstoffnanoröhren ("Carbon Nano Tubes", CNT), Kohlenstofffasern, Graphit oder Ruß, insbesondere Hochleistungsruß handeln. Kohlenstofffasern können insbesondere in Form von kurzen Kohlenstofffasern vorliegen ("Short Carbon Fibers", SCF). Diese kurzen Kohlenstofffasern können insbesondere eine Länge von wenigstens 0,01 mm aufweisen, also beispielsweise auch eine Länge von wenigstens 0,1 mm, 0,2 mm oder 0,5 mm. Die kurzen Kohlenstofffasern können bevorzugt eine Länge von höchstens 50 mm aufweisen, also beispielsweise auch von höchstens 10 mm oder 5 mm. Bevorzugt weisen die kurzen Kohlenstofffasern eine Länge im Bereich von 0,1 bis 5 mm auf.

Die elektrische Leitfähigkeit der weiteren Schicht kann beispielsweise bei über 0,1 S/m (Siemens pro Meter) liegen, also beispielsweise auch über bei über 1, über 10 oder über 100 S/m.

Bevorzugt ist die elektrische Leitfähigkeit der weiteren Schicht höher als die elektrische Leitfähigkeit der Gleitschicht, und besonders bevorzugt deutlich höher. Erfindungsgemäß kann vorgesehen sein, dass die elektrische Leitfähigkeit der weiteren Schicht wenigstens um den Faktor 10, also beispielsweise auch wenigstens um den Faktor 10², 10⁴, 10⁶, 10⁸, 10¹⁰ oder 10¹² höher ist als die elektrische Leitfähigkeit der Gleitschicht. Der Vorteil einer solch unterschiedlich hohen elektrischen Leitfähigkeit liegt insbesondere darin, dass ein Verschleiß der Gleitschicht sehr zuverlässig durch die Vorrichtung zur Messung des elektrischen Widerstandes messbar ist

Nach einer Ausführungsform kann vorgesehen sein, dass das Gleitlager neben der Gleitschicht und der weiteren Schicht weitere Schichten aufweist, beispielsweise eine Einlaufschicht, die insbesondere zum Einlaufen bei der Inbetriebnahme des Gleitlagers dient und beim Einlaufen durch die Welle schnell verschlissen wird, so dass die Welle beim Einlaufen des Lagers zunächst in Kontakt mit der Einlaufschicht tritt und die Gleitschicht erst nach dem Einlaufen des Lagers eine Gleitfläche für die Welle bietet.

Neben elektrisch leitfähigen Füllstoffen können aus Kunststoff aufbauende Schichten des Gleitlagers beispielsweise noch andere Komponente aufweisen, beispielsweise andere Füllstoffe, Verstärkungsstoffe sowie eingebettete Festschmierstoffe oder Öle. Entsprechende weitere Komponenten können beispielsweise gemäß dem Stand der Technik konfektioniert sein.

Die Anordnung von Gleitschicht und weiterer Schicht zueinander ist grundsätzlich beliebig, soweit gewährleistet ist, dass die Gleitschicht - im Normalbetrieb des Gleitlagers und insbesondere bei einer nicht verschlissenen Gleitschicht - eine Gleitfläche für eine durch die Gleitlagerbuchse geführte elektrisch leitfähige Welle bietet und die Welle erst bei einem durch die Welle hervorgerufenen Verschleiß der Gleitschicht in Kontakt mit der wenigstens einen weiteren Schicht tritt. Dem Fachmann sind aus dem Stand der Technik, insbesondere aus der Technologie mehrschichtig aufgebauter Gleitlagerbuchsen, zahlreiche Techniken bekannt, Schichten in Gleitlagern derart anzuordnen, dass eine Welle zunächst nur mit einer Schicht und erst bei Verschleiß dieser Schicht mit einer anderen Schicht in Kontakt tritt.

Nach einer Ausführungsform ist die Gleitschicht außenumfangsseitig von der weiteren Schicht umfasst, also um die Gleitschicht herum beziehungsweise am Außenumfang der Gleitschicht angeordnet. Nach einer alternativen Ausführungsform kann die weitere Schicht in die Gleitschicht eingebettet sein, beispielsweise auch vollständig in die Gleitschicht eingebettet sein; eine solche Ausführungsform kann beispielsweise bei einer empfindlichen weiteren Schicht vorteilhaft sein, beispielsweise um empfindliche Füllstoffe, wie etwa korrodierbare elektrisch leitfähige Füllstoffen, der weiteren Schicht vor Umgebungseinflüssen zu schützen.

Die weitere Schicht kann, im Verhältnis zur Gleitschicht, schmaler und/oder dünner ausgebildet sein. Beispielsweise kann die weitere Schicht nur als ringförmige Schicht um die Gleitschicht herum oder in dieser angeordnet sein. Insofern kann beispielsweise auch vorgesehen sein, die weitere Schicht in Form wenigstens eines Drahtes oder einer Leitung aus einem elektrisch leitfähigen Material, beispielsweise in Form eines oder mehrere Metalldrähte, um die Gleitschicht herum oder in dieser anzuordnen.

Grundsätzlich kann es sich bei dem erfindungsgemäßen Gleitlager um jede Art von Gleitlager handeln, bevorzugt jedoch um ein Kunststoffgleitlager, also beispielsweise ein ungeschmiertes, geschmiertes, hydrodynamisches oder ein hydrostatisches Kunststoffgleitlager.

Bevorzugt handelt es sich bei dem erfindungsgemäßen Gleitlager um ein Radiallager zur Lagerung einer Welle.

Bei der Vorrichtung zur Messung des elektrischen Widerstandes zwischen der weiteren Schicht und einer durch die Gleitschicht geführten Welle kann es sich grundsätzlich um eine beliebige aus dem Stand der Technik zur Messung des elektrischen Widerstandes bekannte Vorrichtung handeln. Die Vorrichtung ist derart angeordnet, dass durch diese der elektrische Widerstand zwischen der weiteren Schicht und einer durch die Gleitschicht geführten Welle messbar ist. Bevorzugt ist die Vorrichtung derart angeordnet, dass durch diese der elektrische Widerstand zwischen der weiteren Schicht und der Welle unmittelbar messbar ist. Durch die Vorrichtung ist mithin der elektrische Widerstand unmittelbar zwischen zwei elektrischen Kontaktpunkten an der weiteren Schicht und der Welle messbar. Dabei ist eine sehr genaue und zuverlässige Messung des elektrischen Widerstandes zwischen der weiteren Schicht und der Welle messbar, die genau und zuverlässig Rückschlüsse über den Zustand des Gleitlagers zulässt. Durch die unmittelbare Messung des elektrischen Widerstandes wird das Messergebnis praktisch nicht beeinflusst und verfälscht.

Die Vorrichtung zur Messung des elektrischen Widerstandes kann Bestandteil einer Messvorrichtung sein, die neben der Vorrichtung zur Messung des elektrischen Widerstandes beispielsweise wenigstens eine der folgenden weiteren Komponenten aufweist: Eine Datenverarbeitungsvorrichtung, eine Anzeigevorrichtung oder eine Speichervorrichtung. Durch die Datenverarbeitungsvorrichtung, beispielsweise einen Mikrocontroller, sind die durch die Vorrichtung zur Messung des elektrischen Widerstandes gemessenen Messsignale, beispielsweise Messdaten, verarbeitbar. Beispielsweise kann durch die Datenverarbeitungsvorrichtung berechenbar sein, ob ein vorgegebener, einen Verschleiß der Gleitschicht indizierender Wert des durch die Vorrichtung zur Messung des elektrischen Widerstandes gemessenen Wertes des elektrischen Widerstandes zwischen der weiteren Schicht und der Welle erreicht ist. Für diesen Fall kann beispielsweise vorgesehen sein, dass die Datenverarbeitungsvorrichtung ein Fehlersignal erzeugt. Durch die Anzeigevorrichtung können Messergebnisse der Vorrichtung zur Messung des elektrischen Widerstandes oder der Messvorrichtung anzeigbar sein. Beispielsweise kann durch die Anzeigevorrichtung der durch die Vorrichtung zur Messung des elektrischen Widerstandes gemessene Wert des elektrischen Widerstandes zwischen der weiteren Schicht und der Welle oder hiervon abhängige Werte, beispielsweise der elektrische Strom oder die elektrische Spannung zwischen der Gleitlagerbuchse und der Welle, oder beispielsweise von der Datenverarbeitungsvorrichtung berechnete Daten anzeigbar sein. Durch die Speichervorrichtung der Messvorrichtung sind durch die Vorrichtung zur Messung des elektrischen Widerstandes gemessene Widerstandsmesswerte oder sonstige Daten der Messvorrichtung, insbesondere beispielsweise auch von den Datenverarbeitungsvorrichtung berechnete beziehungsweise erzeugte Daten, speicherbar.

Gegenstand der vorliegenden Erfindung ist auch das hierin offenbarte Gleitlager, das eine durch die Gleitlagerbuchse beziehungsweise durch die Gleitschicht der Gleitlagerbuchse geführte Welle aufweist.

Die durch die Gleitlagerbuchse führbare beziehungsweise geführte Welle ist elektrisch leitfähig. In der Regel bestehen die durch Gleitlager lagerbaren Wellen aus Stahl oder sonstigen Metalllegierungen, die elektrisch leitfähig sind, so dass eine übliche Welle durch das erfindungsgemäße Gleitlager lagerbar ist. Bevorzugt besteht die durch die Gleitlagerbuchse des erfindungsgemäßen Kunststoffgleitlagers führbare beziehungsweise geführte Welle aus Stahl oder einem sonstigen Metall oder einer Metalllegierung.

Zur Lösung der zweitgenannten Aufgabe wird erfindungsgemäß zur Verfügung gestellt ein Verfahren zur Bestimmung des Verschleißes eines hierin beschriebenen Gleitlagers, umfassend die Verfahrensschritte
- Messung des elektrischen Widerstandes zwischen der weiteren Schicht und einer durch die Gleitlagerbuchse geführten Welle mittels der Vorrichtung zur Messung des elektrischen Widerstandes,
- Bestimmung des Verschleißes des Gleitlagers auf Grundlage des gemessenen elektrischen Widerstandes.

Erfindungsgemäß wird der Verschleiß des Gleitlagers beziehungsweise des Verschleißes der Gleitschicht danach auf Grundlage der durch die Vorrichtung zur Messung des elektrischen Widerstandes gemessenen Werte des elektrischen Widerstandes bestimmt.

Im Übrigen gelten zur Durchführung des erfindungsgemäßen Verfahrens die hierin zur Ausbildung und Verwendung des erfindungsgemäßen Gleitlagers und seiner Bestandteile gemachten Ausführungen entsprechend.

Weitere Merkmale der Erfindung ergeben sich aus den Ansprüchen, der Figur sowie der zugehörigen Figurenbeschreibung.

Sämtliche der hierin zum erfindungsgemäßen Gleitlager sowie zum erfindungsgemäßen Verfahren offenbarten Merkmale können, einzeln oder in Kombination, beliebig miteinander kombiniert sein.

Ein Ausführungsbeispiel eines erfindungsgemäßen Gleitlagers wird anhand des nachfolgenden, stark schematisierten Ausführungsbeispieles näher erläutert.

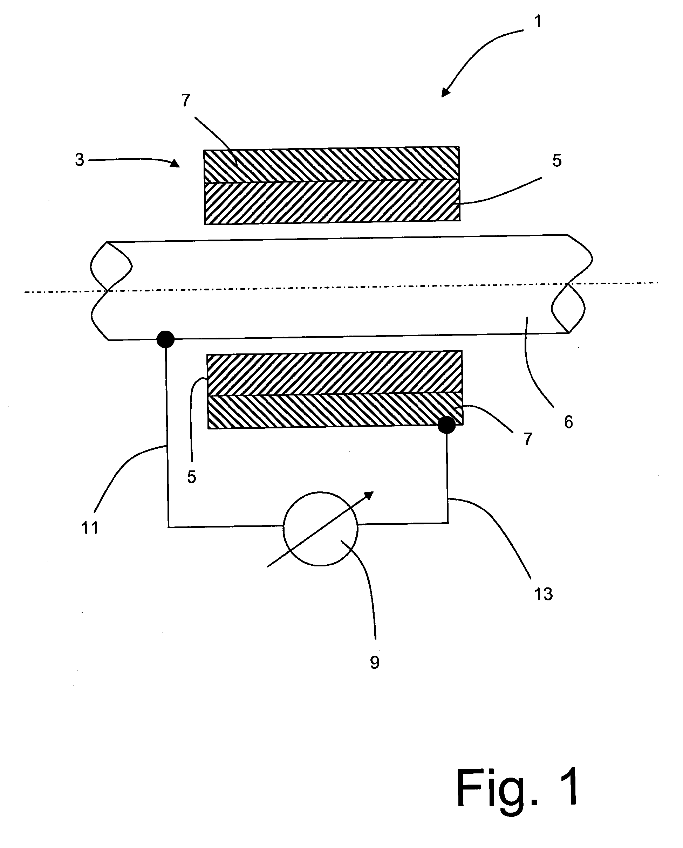

Dabei zeigt
- Figur 1: eine schematische Darstellung eines Gleitlagers in einer seitlichen Schnittansicht.

In seiner Gesamtheit ist das Gleitlager mit dem Bezugszeichen 1 gekennzeichnet.

Das Gleitlager 1 ist als ungeschmiertes Kunststoffgleitlager in Form eines Radiallagers ausgebildet und umfasst eine Gleitlagerbuchse 3 aus einem Verbundwerkstoff, der eine Gleitschicht 5 und eine weitere Schicht 7 aufweist.

Die Gleitschicht 5 ist ebenfalls als Verbundwerkstoff ausgebildet und besteht aus einer Kunststoffmatrix aus Polytetraflourethylen, in die zur Verbesserung der tribologischen Eigenschaften der Gleitschicht 5 ein Füllstoff in Form von kurzen Kohlenstofffasern eingelagert ist. Durch die Einlagerung dieser kurzen Kohlenstofffasern ist die Gleitschicht 5 geringfügig elektrisch leitfähig und weist eine elektrische Leitfähigkeit von etwa 10⁻² S/M auf.

Durch die Gleitlagerbuchse 3 ist eine Welle 6 aus Stahl derart geführt, dass die Gleitschicht 5 eine Gleitfläche für die Welle 6 bietet und die Welle 6 dabei drehbar um eine parallel zur Zeichenebene liegende Drehachse in der Gleitlagerbuchse 3 gelagert ist.

An ihrem Außenumfang ist die Gleitschicht 5 von der weiteren Schicht 7 umfasst. Die weitere Schicht 7 ist als Verbundwerkstoff ausgebildet und besteht aus einer Kunststoffmatrix aus Polytetraflourethylen, in die zur Erhöhung der elektrischen Leitfähigkeit der weiteren Schicht 7 ein Füllstoff in Form von Kohlenstoffnanoröhren eingelagert ist. Durch die Einlagerung dieser Kohlenstoffnanoröhren weist die weitere Schicht 7 eine elektrische Leitfähigkeit von etwa 10⁴ S/M auf. Damit liegt die elektrische Leitfähigkeit der weiteren Schicht 7 etwa um den Faktor 10⁶ höher als die elektrische Leitfähigkeit der Gleitschicht 5.

Das Gleitlager 1 umfasst ferner eine Vorrichtung 9 zur Messung des elektrischen Widerstandes zwischen der weiteren Schicht 7 und der Welle 6. Zur Messung dieses elektrischen Widerstandes ist die Vorrichtung 9 über eine erste Leitung 11 elektrisch mit der Welle 6 und über eine zweite Leitung 13 elektrisch mit der weiteren Schicht 7 kontaktiert.

Die Funktion des dargestellten Kunststoffgleitlagers 1 ist wie folgt.

Im ordnungsgemäßen Zustand des Kunststoffgleitlagers 1, also bei keinem oder einem nur geringfügigen Verschleiß der Gleitschicht 5, ist die Welle 6 derart drehbar in der Gleitlagerbuchse 3 gelagert, dass ausschließlich die Gleitschicht 5 eine Gleitfläche für die Welle 6 bietet, die Welle 6 in der Gleitlagerbuchse 3 also ausschließlich in Kontakt mit der Gleitschicht 5 tritt. In diesem Zustand des Gleitlagers 1 wird durch die Vorrichtung 9 zur Messung des elektrischen Widerstandes ein erster Widerstandswert gemessen. Sobald die Gleitschicht 5 durch die Welle 6 jedoch verschlissen ist, tritt die Welle 6 in Kontakt mit der weiteren Schicht 7, womit sich - aufgrund der unterschiedlichen elektrischen Leitfähigkeiten von Gleitschicht 5 und weiterer Schicht 7 - der elektrische Widerstand zwischen Welle 6 und weiterer Schicht 7 sprunghaft ändert und durch die Vorrichtung 9 zur Messung des elektrischen Widerstand umgehend ein zweiter Widerstandswert gemessen wird, der geringer ist als der erste Widerstandswert. Hierdurch ist der Verschleiß der Gleitschicht umgehend messbar.

## Patentansprüche

1. Gleitlager (1), mit folgenden Merkmalen:
1.1 einer Gleitlagerbuchse (3), durch die eine elektrisch leitfähige Welle (6) führbar ist, wobei
1.2 die Gleitlagerbuchse (3) als Verbundwerkstoff ausgebildet ist und eine Gleitschicht (5) und eine weitere Schicht (7) aufweist;
1.3 die Gleitschicht (5) und die weitere Schicht (7) sind derart ausgebildet, dass die Gleitschicht (5) eine Gleitfläche für eine durch die Gleitlagerbuchse (3) geführte elektrisch leitfähige Welle (6) bietet und die Welle (6) bei einem durch die Welle (6) hervorgerufenen Verschleiß der Gleitschicht (5) in Kontakt mit der weiteren Schicht (7) tritt, wobei ferner
1.4 die Gleitschicht (5) und die weitere Schicht (7) eine unterschiedliche elektrische Leitfähigkeit aufweisen;
1.5 einer Vorrichtung (9) zur Messung des elektrischen Widerstandes zwischen der weiteren Schicht (7) und einer durch die Gleitlagerbuchse (3) geführten elektrisch leitfähigen Welle (6)
**dadurch gekennzeichnet, dass**
1.6 die weitere Schicht (7) mehrschichtig ausgebildet ist, wobei die Schichten eine unterschiedliche elektrische Leitfähigkeit aufweisen.

2. Gleitlager nach Anspruch 1, umfassend eine durch die Gleitlagerbuchse (3) geführte elektrisch leitfähige Welle (6).

3. Gleitlager nach wenigstens einem der vorhergehenden Ansprüche, bei dem die Gleitschicht (5) als elektrischer Isolator ausgebildet ist.

4. Gleitlager nach wenigstens einem der vorhergehenden Ansprüche, bei dem die weitere Schicht (7) als elektrisch leitfähige Schicht ausgebildet ist.

5. Gleitlager nach wenigstens einem der vorhergehenden Ansprüche, bei dem die elektrische Leitfähigkeit der weiteren Schicht (7) höher ist als die elektrische Leitfähigkeit der Gleitschicht (5).

6. Gleitlager nach wenigstens einem der vorhergehenden Ansprüche, bei dem die weitere Schicht (7) ein Matrixpolymer umfasst, in das elektrisch leitfähige Füllstoffe eingebettet sind.

7. Gleitlager nach wenigstens einem der vorhergehenden Ansprüche, wobei die weitere Schicht (7) wenigstens einen elektrisch leitfähigen Füllstoff aus einem der folgenden Stoffe aufweist: Kohlenstoff, Stahl oder Kupfer.

8. Gleitlager nach wenigstens einem der vorhergehenden Ansprüche, wobei die weitere Schicht (7) einen leitfähigen Füllstoff aus Kohlenstoff in Form wenigstens einer der folgenden Modifikationen aufweist: Kohlenstoffnanoröhren, Kohlenstofffasern oder Graphit.

9. Verfahren zur Bestimmung des Verschleißes eines Gleitlagers (1) gemäß Anspruch 1, umfassend die Verfahrensschritte
9.1 Messung des elektrischen Widerstandes zwischen der weiteren Schicht (7) und einer durch die Gleitlagerbuchse (3) geführten Welle (6) mittels der Vorrichtung (9) zur Messung des elektrischen Widerstandes;
9.2 Bestimmung des Verschleißes des Gleitlagers (1) auf Grundlage des gemessenen elektrischen Widerstandes.

## Claims

1. A sliding bearing (1), with the following features:
1.1 a sliding bearing bushing (3), through which an electrically-conductive shaft (6) can be guided, wherein
1.2 the sliding bearing bushing (3) is designed as a composite and has a sliding layer (5) and a further layer (7);
1.3 the sliding layer (5) and the further layer (7) are designed such that the sliding layer (5) provides a sliding surface for an electrically-conductive shaft (6) guided through the sliding bearing bushing (3), and the shaft (6), in the event of wear of the sliding layer (5) caused by the shaft (6), comes into contact with the further layer (7), wherein furthermore
1.4 the sliding layer (5) and the further layer (7) have differing electrical conductivities;
1.5 a device (9) for measuring the electrical resistance between the further layer (7) and an electrically-conductive shaft (6) guided through the sliding bearing bushing (3),
**characterised in that**,
1.6 the further layer (7) is designed as multiple layers, wherein the layers have differing electrical conductivities.

2. The sliding bearing in accordance with claim 1, comprising an electrically-conductive shaft (6) guided through the sliding bearing bushing (3).

3. The sliding bearing in accordance with at least one of the preceding claims, in which the sliding layer (5) is designed as an electrical insulator.

4. The sliding bearing in accordance with at least one of the preceding claims, in which the further layer (7) is designed as an electrically-conductive layer.

5. The sliding bearing in accordance with at least one of the preceding claims, in which the electrical conductivity of the further layer (7) is greater than the electrical conductivity of the sliding layer (5).

6. The sliding bearing in accordance with at least one of the preceding claims, in which the further layer (7) comprises a matrix polymer, into which electrically-conductive fillers are embedded.

7. The sliding bearing in accordance with at least one of the preceding claims, wherein the further layer (7) has at least one electrically-conductive filler of one of the following materials: carbon, steel, or copper.

8. The sliding bearing in accordance with at least one of the preceding claims, wherein the further layer (7) has an electrically-conductive filler of carbon in the form of at least one of the following modifications: carbon nano-tubes, carbon fibres, or graphite.

9. A method for determining the wear of a sliding bearing (1) in accordance with claim 1, comprising the steps:
9.1 measurement of the electrical resistance between the further layer (7) and a shaft (6) guided through the sliding bearing bushing (3) by means of the device (9) for measuring the electrical resistance;
9.2 determination of the wear of the sliding bearing (1) on the basis of the measured electrical resistance.

## Revendications

1. Palier à glissement (1), avec les caractéristiques suivantes :
1.1 un coussinet lisse (3) à travers lequel il est possible de faire passer un arbre (6) électro-conducteur,
1.2 le coussinet lisse (3) étant réalisé en tant que matière composite et présentant une couche de glissement (5) et une autre couche (7) ;
1.3 la couche de glissement (5) et l'autre couche (7) étant réalisées de manière à ce que la couche de glissement (5) offre une surface de glissement pour un arbre (6) électro-conducteur passant à travers le coussinet lisse (3) et l'arbre (6) entrant en contact avec l'autre couche (7) en cas d'usure de la couche de glissement (5) provoquée par l'arbre (6), moyennant quoi
1.4 la couche de glissement (5) et l'autre couche (7) présentent en outre une électro-conductivité différente ;
1.5 un dispositif (9) pour la mesure de la résistance électrique entre l'autre couche (7) et un arbre électro-conducteur (6) passant à travers le coussinet lisse (3),
**caractérisé en ce que**
1.6 l'autre couche (7) est réalisée de manière multicouches, les couches présentant une électro-conductivité différente.

2. Palier à glissement selon la revendication 1, comprenant un arbre électro-conducteur (6) passant à travers le coussinet lisse (3).

3. Palier à glissement selon l'une au moins des revendications précédentes, dans lequel la couche de glissement (5) est réalisé en tant qu'isolateur électrique.

4. Palier à glissement selon l'une au moins des revendications précédentes, dans lequel l'autre couche (7) est réalisée en tant que couche électro-conductrice.

5. Palier à glissement selon l'une au moins des revendications précédentes, dans lequel l'électro-conductivité de l'autre couche (7) est supérieure à l'électro-conductivité de la couche de glissement (5).

6. Palier à glissement selon l'une au moins des revendications précédentes, dans lequel l'autre couche (7) comprend une matrice polymère dans laquelle des masses de remplissage électro-conductrices sont intégrées.

7. Palier à glissement selon l'une au moins des revendications précédentes, l'autre couche (7) présentant au moins une masse de remplissage électro-conductrice se composant de l'une des matières suivantes : du carbone, de l'acier ou du cuivre.

8. Palier à glissement selon l'une au moins des revendications précédentes, l'autre couche (7) présentant une masse de remplissage électro-conductrice en carbone sous la forme d'au moins l'une des modifications suivantes : des nanotubes de carbone, des fibres de carbone ou du graphite.

9. Procédé pour déterminer l'usure d'un palier à glissement (1) selon la revendication 1, comprenant les étapes suivantes du procédé :
9.1 mesure de la résistance électrique entre l'autre couche (7) et un arbre (6) passant à travers le coussinet lisse (3) à l'aide du dispositif (9) pour mesurer la résistance électrique ;
9.2 détermination de l'usure du palier à glissement (1) sur la base de la résistance électrique mesurée.
